# FASCICULE DE BREVET EUROPEEN

(11) **EP 0 986 850 B1**
(45) Date de publication et mention de la délivrance du brevet: **05.09.2007**
(21) Numéro de dépôt: 99911857.3
(22) Date de dépôt: 01.04.1999
(51) Int. Cl.: H02G 3/04

(54) **GOULOTTE APTE A ETRE TRONCONNEE A LA DEMANDE**
NACH WAHL DURCHTRENNBARER KABELKANAL
DUCT CAPABLE OF BEING CUT UP AS REQUIRED

(30) Priorité: 03.04.1998 FR 9804154; 02.11.1998 FR 9813745
(43) Date de publication de la demande: 22.03.2000
(73) Titulaire: PLANET WATTOHM, 60300 Senlis (FR)
(72) Inventeur: PERRARD, Stéphane, F-95330 Domont (FR); GUILLERAULT, Eric, F-75011 Paris (FR)
(74) Mandataire: Barbin le Bourhis, Joël
(86) Numéro de dépôt international: PCT/FR1999/000763
(87) Numéro de publication internationale: WO 1999/052190

(56) Documents cités:
- EP-A- 0 512 241
- EP-A- 0 742 625

## Description

La présente invention concerne d'une manière générale les goulottes destinées au cheminement et à la protection de fils ou câbles électriques.

Elle concerne, plus particulièrement, les goulottes de câblage du type de celles mises en oeuvre, par exemple, dans les armoires électriques.

Ces goulottes de câblage comportent, globalement, suivant une section transversale en forme générale de U, un fond et deux ailes latérales, avec, éventuellement, mais non nécessairement obligatoirement, de place en place, sur l'une au moins des ailes latérales, et, par exemple, sur chacune de celles-ci, des ouvertures propres à permettre, localement, à la demande, en un ou plusieurs endroits dûment choisis le long de leur longueur, l'entrée ou la sortie d'un ou plusieurs câbles électriques.

Par exemple, le document EP 0 742 625 A1 décrit une goulotte de câblage du genre comportant, suivant une section transversale en forme générale de U, un fond et deux ailes latérales.

Réalisées à des longueurs déterminées, en pratique par extrusion, les goulottes de câblage de ce type doivent fréquemment être tronçonnées à une longueur inférieure, notamment pour satisfaire à leurs conditions pratiques d'utilisation.

La présente invention a d'une manière générale pour objet une disposition de nature à faciliter ce tronçonnage.

De manière plus précise, elle a pour objet une goulotte de câblage du genre comportant, suivant une section transversale en forme générale de U, un fond et deux ailes latérales, cette goulotte de câblage étant d'une manière générale caractérisée en ce qu'elle présente, transversalement, de place en place, des zones de moindre résistance.

Préférentiellement, ces zones de moindre résistance s'étendent, au moins, sur la totalité de la largeur du fond.

Préférentiellement, également, lorsque les ailes latérales présentent des ouvertures, les zones de moindre résistance prévues suivant l'invention s'étendent avantageusement en correspondance avec ces ouvertures.

Suivant un développement de l'invention, elles peuvent d'ailleurs également s'étendre sur les ailes latérales.

Par exemple, lorsque ces ailes latérales présentent des ouvertures, elles peuvent aller jusqu'à rejoindre celles-ci.

Mais, lorsque les ailes latérales sont dépourvues d'ouverture, elles peuvent également s'étendre sur la totalité de la hauteur de ces ailes latérales.

Quoi qu'il en soit, par leur présence même, et indépendamment de leur extension plus ou moins importante, les zones de moindre résistance prévues suivant l'invention facilitent avantageusement le tronçonnage de la goulotte de câblage.

En particulier, elles canalisent avantageusement la coupe correspondante, au bénéfice de la régularité et de la qualité du tronçonnage obtenu.

Lorsqu'elles affectent en totalité ou en partie les ailes latérales de la goulotte de câblage, les zones de moindre résistance prévues suivant l'invention facilitent également avantageusement l'élimination de tout un panneau de l'une et/ou de l'autre de ces ailes latérales, notamment lorsque, par exemple, il est nécessaire d'abouter latéralement à la goulotte de câblage une autre goulotte de câblage, suivant globalement une dérivation en T.

Les caractéristiques et avantages de l'invention ressortiront d'ailleurs de la description qui va suivre, à titre d'exemple, en référence aux dessins schématiques annexés sur lesquels :
la figure 1 est une vue partielle en perspective d'une goulotte de câblage suivant l'invention ;
la figure 2 en est, à échelle supérieure, une vue partielle en coupe longitudinale, suivant la ligne II-II de la figure 1 ;
la figure 3 est une vue partielle en coupe longitudinale qui, dérivée de celle de la figure 2, illustre le tronçonnage de la goulotte de câblage suivant l'invention ;
les figures 4 et 5 sont des vues qui, analogues, chacune respectivement, à celles des figures 1 et 2, se rapportent à une variante de réalisation ;
la figure 6 est une vue partielle en perspective qui, analogue à celle de la figure 1, concerne une autre goulotte de câblage suivant l'invention.

Tel qu'illustré sur ces figures, et de manière connue en soi, une goulotte de câblage 10 suivant l'invention comporte, globalement, suivant une section transversale en forme générale de U, un fond 11 et deux ailes latérales 12.

Dans les formes de réalisation représentées, les ailes latérales 12 sont de même hauteur, et, parallèles l'une à l'autre, elles s'étendent l'une et l'autre sensiblement perpendiculairement au fond 11.

Suivant l'invention, la goulotte de câblage 10 présente, transversalement, de place en place, des zones de moindre résistance 14 de nature à faciliter son éventuel tronçonnage.

Par exemple, et tel que représenté, ces zones de moindre résistance 14 sont établies à un pas P régulier, et elles résultent chacune de la présence d'une gorge 15 en creux sur la face interne de la goulotte de câblage 10.

Par exemple, et tel que représenté, cette gorge 15 a, en section transversale, un profil triangulaire.

Préférentiellement, et cela est le cas dans l'ensemble des formes de réalisation représentées, les zones de moindre résistance 14 s'étendent au moins sur la totalité de la largeur du fond 11.

Par exemple, et tel que représenté, elles s'étendent ainsi en continu sur la totalité de cette largeur.

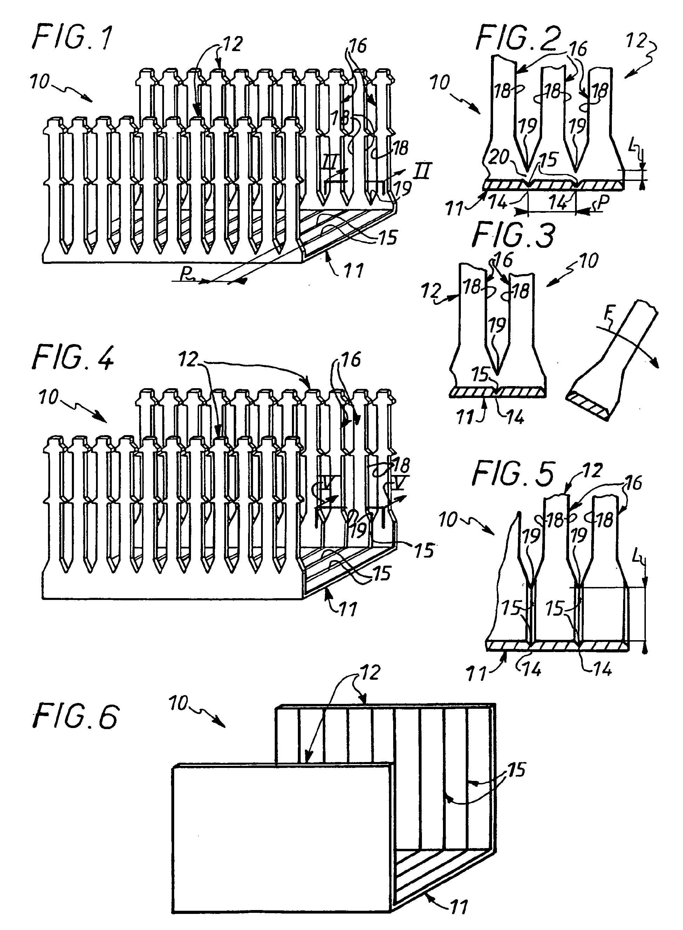

Dans la forme de réalisation plus particulièrement représentée sur les figures 1 à 3, les ailes latérales 12 présentent, de place en place, de manière connue en soi, à un pas régulier, des ouvertures 16 propres à permettre localement, l'entrée ou la sortie d'au moins un câble électrique, non représenté.

En pratique, ces ouvertures 16 comportent deux bords latéraux 18, qui, du côté du fond 11, convergent, au moins localement, l'un vers l'autre, suivant une forme générale de pointe 19 dirigée vers ce fond 11.

En pratique, également, cette pointe 19 s'étend à distance du fond 11.

Il subsiste donc, dans les ailes latérales 12, entre leurs ouvertures 16 et le fond 11, une zone de matière 20 où ces ailes latérales 12 sont normalement à pleine épaisseur.

Soit L la distance correspondante, mesurée du fond 11 à la pointe 19 des ouvertures 16.

Dans la forme de réalisation représentée sur les figures 1 à 3, cette distance L est supposée être relativement faible.

Préférentiellement, et tel que représenté, les zones de moindre résistance 14 prévues suivant l'invention s'étendent en correspondance avec les ouvertures 16 des ailes latérales 12, au droit de la pointe 19 formée par celles-ci.

Cela implique que leur pas P soit égal à celui des ouvertures 16 ou qu'il soit un multiple de ce dernier.

Mais, dans la forme de réalisation représentée, ces zones de moindre résistance 14 ne concernent que le seul fond 11, sans s'étendre sur les ailes latérales 12.

Si, comme schématisé à la figure 3, la goulotte de câblage 10 doit être tronçonnée, il suffit d'agir en flexion au droit d'une de ces zones de moindre résistance 14, tel que schématisé par une flèche F sur cette figure 3, soit que la force ainsi exercée soit suffisante pour rompre la zone de matière 20 correspondante des ailes latérales 12, soit que celle-ci soit au préalable sectionnée à l'aide d'un quelconque outil, une lame de couteau ou une pince par exemple, mis en oeuvre à la faveur de l'ouverture 16 correspondante.

Dans la variante de réalisation représentée sur les figures 4 et 5, la distance L séparant du fond 11 les ouvertures 16 des ailes latérales 12 est supposée être plus importante.

Dans ce cas, les zones de moindre résistance 14 prévues suivant l'invention s'étendent aussi sur les ailes latérales 12, sur une partie au moins de la distance L séparant le fond 11 de leurs ouvertures 16, en correspondance avec ces ouvertures 16.

Préférentiellement, et tel que représenté, les zones de moindre résistance 14 s'étendent sur les ailes latérales 12 jusqu'à rejoindre leurs ouvertures 16.

Plus précisément, et tel que représenté, les zones de moindre résistance 14 rejoignent alors ces ouvertures 16 au droit de leur pointe 19.

Ainsi, les gorges 15 dont résultent les zones de moindre résistance 14 affectent, dans ce cas, non seulement le fond 11, mais, également, les ailes latérales 12.

Dans la forme de réalisation représentée sur la figure 6, les ailes latérales 12 de la goulotte de câblage 10 sont pleines.

Autrement dit, elles sont dépourvues d'ouverture.

Dans ce cas, les zones de moindre résistance 14 prévues suivant l'invention s'étendent avantageusement sur une partie au moins de la hauteur des ailes latérales 12.

Dans la forme de réalisation représentée, ces zones de moindre résistance 14 s'étendent sur la totalité de la hauteur des ailes latérales 12, en continu à compter du fond 11.

Autrement dit, les gorges 15 dont résultent ces zones de moindre résistance 14 affectent, dans ce cas, sur toute leur hauteur, les ailes latérales 12, du fond 11 à leur bord libre.

Bien entendu, la présente invention ne se limite pas aux formes de réalisation décrites et représentées, mais englobe toute variante d'exécution.

En particulier, au lieu d'affecter en creux la face interne de la goulotte de câblage concernée, les gorges dont résultent les zones de moindre résistance prévues suivant l'invention pourraient tout aussi bien affecter sa face externe.

En outre, au lieu d'être continues, ces gorges pourraient au moins être localement discontinues.

De plus, en section transversale, le profil de ces gorges n'est pas nécessairement triangulaire.

Au contraire, ce profil peut par exemple tout aussi bien être hémicirculaire.

Par ailleurs, au lieu de résulter de la présence de telles gorges, les zones de moindre résistance prévues suivant l'invention peuvent résulter chacune de perforations alternant avec des zones pleines.

En outre, ces zones de moindre résistance peuvent ne s'étendre que sur l'une des ailes latérales, et non pas nécessairement sur les deux.

Enfin, lorsque ces ailes latérales présentent des ouvertures, les zones de moindre résistance prévues suivant l'invention peuvent être établies à distance de ces ouvertures et/ou à un pas qui, au lieu d'être égal à celui de ces ouvertures, est un multiple de celui-ci.

D'une manière plus générale, les zones de moindre résistance prévues suivant l'invention ne sont pas nécessairement établies à un pas régulier.

## Revendications

1. Goulotte de câblage du genre comportant, suivant une section transversale en forme générale de U, un fond (11) et deux ailes latérales (12), **caractérisée en ce qu'**elle présente, transversalement, de place en place, des zones de moindre résistance (14) s'étendant sur la totalité de la largeur du fond (11), et **en ce que** les ailes latérales (12) présentent, de place en place, des ouvertures (16), les zones de moindre résistance (14) s'étendant en correspondance avec ces ouvertures (16).

2. Goulotte de câblage suivant la revendication 1, **caractérisée en ce que**, les ouvertures (16) des ailes latérales (12) comportant deux bords latéraux (18) qui, du côté fond (11), convergent, au moins localement, l'un vers l'autre, suivant une forme générale de pointe (19) dirigée vers ce fond (11), les zones de moindre résistance (14) s'étendent au droit de cette pointe (19).

3. Goulotte de câblage suivant l'une quelconque des revendications 1, 2, **caractérisée en ce que** les zones de moindre résistance (14) s'étendent sur les ailes latérales (12), sur une partie au moins de la distance (L) séparant le fond (11) de leurs ouvertures (16).

4. Goulotte de câblage suivant la revendication 3, **caractérisée en ce que** les zones de moindre résistance (14) rejoignent les ouvertures (16).

5. Goulotte de câblage suivant la revendication 1, **caractérisée en ce que** les zones de moindre résistance (14) s'étendent sur une partie au moins de la hauteur des ailes latérales (12).

6. Goulotte de câblage suivant la revendication 5, **caractérisée en ce que** les zones de moindre résistance (14) s'étendent sur la totalité de la hauteur des ailes latérales (12).

7. Goulotte de câblage suivant l'une quelconque des revendications 1 à 6, **caractérisée en ce que** les zones de moindre résistance (14) résultent chacune de la présence d'une gorge (15) en creux sur sa face interne ou externe.

8. Goulotte de câblage suivant l'une quelconque des revendications 1 à 7, **caractérisée en ce que** les zones de moindre résistance (14) résultent chacune de perforations alternant avec des zones pleines.

## Claims

1. Cable trunking having a generally U-shaped cross section defined by a base (11) and two side flanges (12), **characterised in that** it has spaced transverse weaker areas (14) extending the full width of the base (11) and **in that** the lateral flanges (12) have spaced openings (16) in them and the weaker areas (14) are in corresponding relationship to the openings (16).

2. Cable trunking according to claim 1, **characterised in that** the openings (16) in the side flanges (12) have two lateral edges (18) which on the same side as the base (11) converge at least locally to form a point (19) directed towards the base (11), the weaker areas (14) being in line with the point (19).

3. Cable trunking according to claim 1 or claim 2, **characterised in that** the weaker areas (14) extend onto the side flanges (12) over at least part of the distance (L) between the base (11) and their openings (16).

4. Cable trunking according to claim 3, **characterised in that** the weaker areas (14) join onto the openings (16).

5. Cable trunking according to claim 1, **characterised in that** the weaker areas (14) extend at least part of the height of the side flanges (12).

6. Cable trunking according to claim 5, **characterised in that** the weaker areas (14) extend the full height of the side flanges (12).

7. Cable trunking according to any ane of claims 1 to 6, **characterised in that** the weaker areas (14) are each provided by a groove (15) recessed into its inside or outside face.

8. Cable trunking according to any one of claims 1 to 7, **characterised in that** its weaker areas (14) are each provided by perforations alternating with solid areas.

## Patentansprüche

1. Kabelkanal, der in einem allgemein U-förmigen Querschnitt einen Boden (11) und zwei Seitenwangen (12) aufweist, **dadurch gekennzeichnet, dass** er in Querrichtung stellenweise Bereiche (14) geringerer Festigkeit aufweist, die sich über die gesamte Breite des Bodens (11) erstrecken, und dass die Seitenwangen (12) örtlich Öffnungen (16) aufweisen, wobei die Bereiche (14) geringerer Festigkeit sich in Entsprechung mit diesen Öffnungen (16) erstrecken.

2. Kabelkanal nach Anspruch 1, **dadurch gekennzeichnet, dass**, wenn die Öffnungen (16) der Seitenwangen (12) zwei seitliche Ränder (18) aufweisen, die auf der Seite des Bodens (11) mindestens örtlich gemäß der allgemeinen Form einer diesem Boden (11) zugewandten Spitze (19) aufeinander zu konvergieren, die Bereiche (14) geringerer Festigkeit sich auf Höhe dieser Spitze (19) erstrecken.

3. Kabelkanal nach einem der Ansprüche 1 und 2, **dadurch gekennzeichnet, dass** die Bereiche (14) geringerer Festigkeit sich auf den Seitenwangen (12) über mindestens einen Teil des Abstands (L) des Bodens (11) von ihren Öffnungen (16) erstrecken.

4. Kabelkanal nach Anspruch 3, **dadurch gekennzeichnet, dass** die Bereiche (14) geringerer Festigkeit bis zu den Öffnungen (16) reichen.

5. Kabelkanal nach Anspruch 1, **dadurch gekennzeichnet, dass** die Bereiche (14) geringerer Festigkeit sich über mindestens einen Teil der Höhe der Seitenwangen (12) erstrecken.

6. Kabelkanal nach Anspruch 5, **dadurch gekennzeichnet, dass** die Bereiche (14) geringerer Festigkeit sich über die gesamte Höhe der Seitenwangen (12) erstrecken.

7. Kabelkanal nach einem der Ansprüche 1 bis 6, **dadurch gekennzeichnet, dass** die Bereiche (14) geringerer Festigkeit sich jeweils aus dem Vorhandensein einer auf der Innen- oder Außenseite des Kabelkanals vertieften Nut (15) ergeben.

8. Kabelkanal nach einem der Ansprüche 1 bis 7, **dadurch gekennzeichnet, dass** die Bereiche (14) geringerer Festigkeit sich jeweils aus Perforationen ergeben, die mit vollen Bereichen abwechseln.
